# EUROPEAN PATENT APPLICATION

(11) **EP 3 467 616 A1**
(43) Date of publication of application: **10.04.2019**
(21) Application number: 16903242.2
(22) Date of filing: 01.06.2016
(51) Int. Cl.: G06F 3/01, G06K 9/00, G10L 25/63

(54) **METHOD FOR OPERATING ARTIFICIAL INTELLIGENCE TRANSPARENT DISPLAY AND ARTIFICIAL INTELLIGENCE TRANSPARENT DISPLAY**

(30) Priority: 25.05.2016 KR 20160063996
(71) Applicant: Kim, Seon Pil, Goyang-si, Gyeonggi-do 10415 (KR)
(72) Inventor: Kim, Seon Pil, Goyang-si, Gyeonggi-do 10415 (KR)
(74) Representative: Beetz & Partner mbB
(86) International application number: PCT/KR2016/005807
(87) International publication number: WO 2017/204394

(57) **Abstract**

A method for operating an artificial intelligence transparent display and the artificial intelligence transparent display are disclosed. The method for operating an artificial intelligence transparent display can comprise the steps of: allowing a plurality of sensors implemented in the artificial intelligence transparent display to sense user information; allowing an artificial intelligence processor implemented in the artificial intelligence transparent display to generate reaction operation information on the basis of the user information; and allowing an artificial intelligence object outputted on a transparent display implemented in the artificial intelligence transparent display to operate according to the reaction operation information.

## Description

### [Technical Field]

The present invention relates to displays, and more specifically, to methods for operating artificial intelligence transparent displays and artificial intelligence transparent displays.

### [Background Art]

Following cathode ray tube (CRT) displays, flat panel displays have been playing a leading role in display industry, seeing an enormous growth particularly in light of larger and slimmer form factor. A future focus for such types of displays would be on making them flexible and transparent. Generally, transparent display refers to a display that has such a degree of transmittance that display devices are noticeable even when displayed off and remains transparent when displayed off. Transparent display technology is still in its infancy without any standard, e.g., as to how much transmittance is required in their on/off modes or any reference to measure image quality. Presently, all displays manufactured to be able to see the background underneath the screen in screen off mode may be said to be transparent displays.

Liquid crystal display (LCD) TVs (including light emitting diode (LED) LCD TVs) taking up a major share of the TV market are gradually losing profit due to a lowering technological barrier and increasing supply especially from Chinese manufacturers, and thus, domestic TV or panel manufacturers are facing a serious challenge. Such a trend is highly likely to go on. As smartphones and tablet PCs appear, there is increasing demand for high-end, mid- or small-size displays and the market is still controlled by mostly Korean or Japanese manufacturers. However, this industrial sector is also expected to follow the same precedent as TVs. To escape from the hardship, a need arises to reinforce the existing display market for TVs or mobile products with more viable products while pioneering brand-new displays. Transparent displays are expected to be a potent breakthrough.

### [Detailed Description of the Invention]

### [Technical Problem]

According to an aspect of the present invention, there is provided a method for operating an artificial intelligence transparent display.

According to another aspect of the present invention, there is provided an artificial intelligence transparent display.

### [Technical Solution]

According to an aspect of the present invention, a method for operating an artificial intelligence transparent display may comprise sensing user information, by a plurality of sensors implemented in the artificial intelligence transparent display, generating reaction information based on the user information, by an artificial intelligence processor implemented in the artificial intelligence transparent display, and performing an operation as per the reaction information, by an artificial intelligence object output on a transparent display implemented in the artificial intelligence transparent display.

Meanwhile, the plurality of sensors may include a facial expression recognition sensor, a voice recognition sensor, and a motion recognition sensor, and the user information may include facial expression information generated by the facial expression recognition sensor, voice information generated by the voice recognition sensor, and motion information generated by the motion recognition sensor.

Further, the facial expression recognition sensor may determine, as the facial expression information, one of a plurality of facial expression categories by analyzing a motion of a facial muscle of a user and a motion of each element included in the user's face with respect to the user's default facial expression information initially obtained, and the facial expression recognition sensor may determine a sensitivity of sensing a variation in facial expression to generate the facial expression information by detecting a degree of variation in the user's facial expression.

Further, the voice recognition sensor may extract feature information about the user's voice based on the user's initial voice information initially obtained and extract the user's voice from a sound entered based on the feature information, and the artificial intelligence transparent display may sense a variation in magnitude and speed of the user's voice based on the initial voice information, determine the user's emotion, and generate the reaction information.

Further, the motion recognition sensor may sense a pattern and magnitude of the user's motion, and the artificial intelligence transparent display may determine a magnitude of the user's emotion considering the pattern and magnitude of the motion, and generate the reaction information.

According to another aspect of the present invention, an artificial intelligence transparent display may comprise a plurality of sensors implemented to sense user information, an artificial intelligence processor implemented to generate reaction information based on the user information, and a transparent display implemented to output an artificial intelligence object, the artificial intelligence object implemented to perform an operation as per the reaction information.

Meanwhile, the plurality of sensors may include a facial expression recognition sensor, a voice recognition sensor, and a motion recognition sensor, and the user information may include facial expression information generated by the facial expression recognition sensor, voice information generated by the voice recognition sensor, and motion information generated by the motion recognition sensor.

Further, the facial expression recognition sensor may determine, as the facial expression information, one of a plurality of facial expression categories by analyzing a motion of a facial muscle of a user and a motion of each element included in the user's face with respect to the user's default facial expression information initially obtained, and the facial expression recognition sensor may determine a sensitivity of sensing a variation in facial expression to generate the facial expression information by detecting a degree of variation in the user's facial expression.

Further, the voice recognition sensor may extract feature information about the user's voice based on the user's initial voice information initially obtained and extract the user's voice from a sound entered based on the feature information, and the artificial intelligence processor may sense a variation in magnitude and speed of the user's voice based on the initial voice information, determine the user's emotion, and generate the reaction information.

Further, the motion recognition sensor may sense a pattern and magnitude of the user's motion, and the artificial intelligence processor may determine a magnitude of the user's emotion considering the pattern and magnitude of the motion, and generate the reaction information.

### [Advantageous Effects]

The method for operating an artificial intelligence transparent display and an artificial intelligence transparent display, according to embodiments of the present invention enable interactions with the user based on facial expression information, voice information, and operation information created by the user and may thus be utilized in various service sectors, thereby enhancing user convenience.

### [Brief Description of Drawings]

Fig. 1 is a concept view illustrating an artificial intelligence transparent display according to an embodiment of the present invention;
Fig. 2 is a concept view illustrating operations of an artificial intelligence transparent display according to an embodiment of the present invention;
Fig. 3 is a concept view illustrating a method for determining facial expression information in an artificial intelligence transparent display according to an embodiment of the present invention;
Fig. 4 is a concept view illustrating operations of an artificial intelligence transparent display according to an embodiment of the present invention;
Fig. 5 is a concept view illustrating operations of an artificial intelligence transparent display according to an embodiment of the present invention; and
Fig. 6 is a concept view illustrating operations of an artificial intelligence transparent display according to an embodiment of the present invention.

### [Mode for Carrying out the Invention]

The present invention is described below in detail in connection with particular embodiments thereof, taken in conjunction with the accompanying drawings. Embodiments are described thoroughly enough to make a skilled artisan practice the present invention. It should be noted that various embodiments of the present invention, although differing from each other, do not necessarily exclude each other. For example, specific shapes, structures, and characteristics described herein in connection with one embodiment may be implemented in other embodiments without departing from the spirit and scope of the present invention. It should also be appreciated that the location or arrangement of individual components in each embodiment may be varied without departing from the spirit and scope of the present invention. Thus, the following detailed description should not be intended as limiting, and the scope of the present invention is defined only by the appending claims and their equivalents so long as adequately described. The same reference denotations may be used to refer to the same or similar elements throughout the drawings and the specification.

Hereinafter, preferred embodiments of the present invention are described in detail with reference to the accompanying drawings.

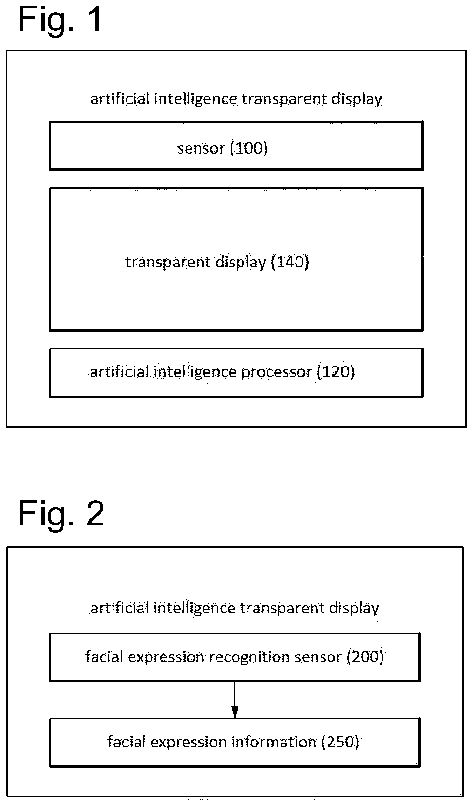

Fig. 1 is a concept view illustrating an artificial intelligence transparent display according to an embodiment of the present invention;

Fig. 1 illustrates an artificial intelligence transparent display to provide a virtual character that may actually conversate with the user.

Referring to Fig. 1, the artificial intelligence transparent display may include a sensor 100 that may sense the user's facial expression, motion, or sound, an artificial intelligence processor 120 that may analyze information sensed by the sensor and enable a conversation with the user, and a transparent display 140.

The sensor 100 implemented in the artificial intelligence transparent display may include a face recognition sensor to detect the facial expression of the user who is in front of the front surface of the artificial intelligence transparent display, a motion recognition sensor to sense the user's motion, and a voice recognition sensor to sense the user's voice information. Such sensors 100 are merely an example. Other various sensors may be used for interactions between the artificial intelligence transparent display and the user.

The artificial intelligence processor 120 may be implemented to interact with the user based on the sensing information (e.g., facial expression information, motion information, and voice information) received from the sensor 100. The artificial intelligence transparent display may provide an artificial intelligence object (e.g., a human image) through the transparent display 140, and the artificial intelligence object may interact with the user based on the artificial intelligence processor 120. The screen of the artificial intelligence transparent display may be implemented as a transparent display 140 so that the rest except for the portion where the artificial intelligence object is output may be displayed transparently.

For example, the artificial intelligence processor 120 may generate, as reaction information, content of conversation according to the user's facial expression, based on the user's facial expression information received from the facial expression recognition sensor or the voice information received from the voice recognition sensor. The artificial intelligence processor 120 may control the artificial intelligence object to utter the generated content of conversation, as the reaction information.

According to an embodiment of the present invention, the artificial intelligence transparent display may be utilized in various applications or sectors.

For example, the artificial intelligence transparent display may be used in restaurants, bars, or other places. Specifically, the artificial intelligence transparent display may obtain user information, such as the facial expression information, motion information, or voice information about the user eating food or drinking, through various sensors implemented in the artificial intelligence transparent display and generate reaction information responsive to the user information. The artificial intelligence object output on the screen of the artificial intelligence transparent display may be operated based on the reaction information. For example, the artificial intelligence object may analyze the user's facial expression information and the voice information uttered by the user and provide the most appropriate response to the user.

As another example, the artificial intelligence transparent display may be installed in a nursing place or hospital to play a role as a conversation partner for patients. The artificial intelligence transparent display may also serve as a conversation partner for the handicapped in a wheelchair.

Or, the artificial intelligence transparent display may sense the patient's condition and nurse them. Specifically, the artificial intelligence transparent display may nurse or take care of dementia patients or elderly patients. The artificial intelligence transparent display may continue to measure or observe the patient's various pieces of health information (e.g., body temperature, pulse, blood pressure, facial expression, or motion) through a smart band connected via Bluetooth thereto and a sensor, such as a motion recognition sensor, voice recognition sensor, or facial expression recognition sensor, positioned on the top of the display device. The artificial intelligence transparent display may normally serve as a conversation partner for the patient and help relieving the boredom for people with dementia or Alzheimer' disease or elderly people by playing gymnastics, brain training games, or quiz. Further, the artificial intelligence transparent display may provide various entertainments to prevent the patient from feeling alone by searching for, e.g., music, movies, or dramas, which the user used to enjoy when he was young and playing them at a proper time.

Further, the artificial intelligence transparent display may notify the patient of the time to take medicine or eat meal or to ask if he wants to go to bathroom, or call in the caregiver as necessary. Immediately when the patient is motionless out of his sleep time or is found abnormal, the artificial intelligence may determine whom it is to call in depending on the degree of danger and notify the doctor, nurse, or his family.

The artificial intelligence transparent display may also be utilized as a cook's assistant or office assistant, a receptionist in company and/or hotel, or in Karaoke, daycare centers, orphanage, school, or welfare facilities. Specifically, where the user cooks a certain food, the artificial intelligence transparent display may provide the user with information about a recipe for the food through the artificial intelligence object. Further, the artificial intelligence object may play a role as an office assistant to place or take calls or do scheduling. In such a place as a company or hotel concierge, the artificial intelligence object of the artificial intelligence transparent display may also conduct other various tasks, such as booking a room for the user. In such a place as Karaoke, the artificial intelligence object of the artificial intelligence transparent display may play songs. In such a place as school, orphanage, or daycare center, the artificial intelligence object of the artificial intelligence transparent display may communicate with infants or students and provide to a curriculum. Besides, the artificial intelligence object of the artificial intelligence transparent display may serve as a conversation partner for elderly people or provide programs in a welfare facility or may be utilized for other various purposes.

The artificial intelligence object may be downloaded by the user's selection. For example, the user may download the artificial intelligence object from a server for download, e.g., App store server, and the downloaded artificial intelligence object may be output on the artificial intelligence transparent display. As the artificial intelligence object, various characters may be developed, and sale of such artificial intelligence objects may be a revenue model. For example, idols, comics characters, models, actors, comedians, or the user-related figures (e.g., his family members) may be utilized for the artificial intelligence object.

Fig. 2 is a concept view illustrating operations of an artificial intelligence transparent display according to an embodiment of the present invention.

Fig. 2 illustrates a method in which an artificial intelligence transparent display performs reactions based on information gathered from various sensors.

Referring to Fig. 2, the facial expression recognition sensor 200 may determine the user's facial expression information. For example, the facial expression recognition sensor 200 may determine, as the facial expression information, one of various categories, such as anger, joy, sadness, gloominess, excitement, or poker face. The facial expression recognition sensor 200 may analyze, e.g., an eye motion, lip motion, or facial muscle motion on the user's face and may determine, as facial expression information, one of various facial expression categories. Specifically, the facial expression recognition sensor 200 may determine, as the facial expression information 250, one of various facial expression categories, considering the degree of variation in the user's default facial expression. Since the degree of variation in facial muscles or the shape of an eye or mouth according to emotions may differ per user, the facial expression recognition sensor 200 may set different recognition sensitivities per user.

For example, the facial expression recognition sensor 200 may detect the degree of variation in the user's facial expression by an initial interaction with the user for a preset time and determine the degree of variation in the user's facial expression. The facial expression recognition sensor 200 may set the sensitivity to 1 for users who make a significant change to their facial expression to relatively lower the sensitivity of sensing variations in facial expression and may set the sensitivity to 5 for users who make a less change to their facial expression to relatively increase the sensitivity of sensing variations in facial expression.

Further, the analysis algorithm may be varied adaptively to the user. For example, where the user smiles, information about the change in the user's eyes and mouth may be obtained. Changes in eyes or mouth may differ from user to user. Information about specific changes in facial expression per user may be obtained while the user and the artificial intelligence transparent display interact with each other.

Specifically, the facial expression recognition sensor 200 may determine that the user is smiling, and the artificial intelligence transparent display may generate first reaction information based on first user information (facial expression information) recognized by the facial expression recognition sensor 200. The user may generate second user information (e.g., facial expression information, motion information, or voice information) based on the first reaction information from the artificial intelligence transparent display. The artificial intelligence transparent display may determine whether the first reaction information is accurate based on the received second user information and may, in turn, determine whether the first user information is the result precisely sensed by the facial expression recognition sensor.

Where the first user information is the result precisely sensed by the facial expression recognition sensor 200, the facial expression recognition sensor may generate the user's facial expression information using the same analysis algorithm. Conversely, unless the first user information is determined to be the result precisely sensed by the facial expression recognition sensor 200, the facial expression recognition sensor 200 may make a variation to the analysis algorithm and generate the user's facial expression information 250.

Specifically, unless the first user information is determined to be the result precisely sensed by the facial expression recognition sensor 200, the facial expression recognition sensor 200 may modify the analysis algorithm. For example, where the user makes the same facial expression, to prevent the user's facial expression from being determined as the first user information, the degree of variations in elements, such as eyes or mouth, and the degree of variations in facial muscles, in the analysis algorithm may be adjusted.

Although Fig. 2 considers the hypothesis that the facial expression recognition sensor 200 determines user information (facial expression information), the facial expression recognition sensor 200 may only detect variations in the user's face, and the artificial intelligence processor may determine user information (facial expression information 250) based on variations in the user's face.

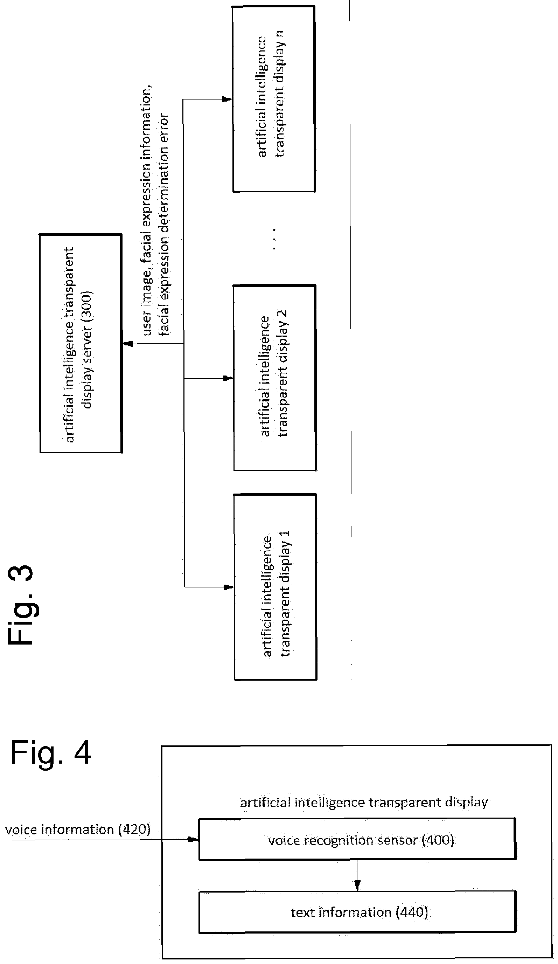

Fig. 3 is a concept view illustrating a method for determining facial expression information in an artificial intelligence transparent display according to an embodiment of the present invention.

Fig. 3 illustrates a method for more accurately determining facial expression information as the user's user information.

Referring to Fig. 3, a plurality of artificial intelligence transparent displays may be connected with an artificial intelligence transparent display server 300. Each of the plurality of artificial intelligence transparent displays may transmit, to the artificial intelligence transparent display server 300, the user's image entered, the user's facial expression information determined based on the user's image, and information about whether the determination of the facial expression information is correct or wrong (hereinafter, facial expression determination error information). The facial expression determination error information may be information as to whether the user's facial expression information generated based on the user's image is correct or incorrect. As set forth above, the facial expression determination error information may be determined considering user information, which is the user's reaction to the reaction information from the artificial intelligence transparent display, which is generated based on the facial expression information.

The artificial intelligence transparent display server 300 may generate a determination algorithm to generate more accurate facial expression information through learning based on the user's images, the user's facial expression information, and facial expression determination error information received from each of the plurality of artificial intelligence transparent displays. For example, the artificial intelligence transparent display server 300 may continuously update the determination algorithm to generate more accurate facial expression information based on a machine learning algorithm, such as deep learning.

The artificial intelligence transparent display server 300 may transmit the updated facial expression information determination algorithm to each of the plurality of artificial intelligence transparent displays, and each of the plurality of artificial intelligence transparent displays may make a determination on the facial expression information based on the updated facial expression information determination algorithm.

As a specific example, the artificial intelligence transparent display server 300 may, rather than providing a single unified facial expression information determination algorithm, provide the most appropriate facial expression information determination algorithm per user image. The user's gender, age, head shape, or facial muscles may be analyzed based on the user's image, and the most appropriate facial expression information determination algorithm may be provided for the user's gender, age, head shape, or facial muscles.

Fig. 4 is a concept view illustrating operations of an artificial intelligence transparent display according to an embodiment of the present invention.

Fig. 4 illustrates a method in which an artificial intelligence transparent display performs reactions based on information gathered from various sensors.

Referring to Fig. 4, the voice recognition sensor 400 may gather the user's voice information 420.

The voice recognition sensor 400 may receive initial voice information 420 from the user and may obtain feature information about the user's voice based on the initial voice information 420. For example, the voice recognition sensor 400 may obtain feature information about the user's voice to separate the user's voice form ambient noise and may obtain only the user's voice information from the sound information inputted.

The voice recognition sensor 400 may convert the received voice information 420 into text information 440. For example, where the user utters the sentence "I am going to amusement park tomorrow," the voice recognition sensor 400 may convert the user's voice into text and transmit the text, as user information, to the artificial intelligence processor.

The artificial intelligence processor may be implemented to receive the text as user information, generate reaction information responsive to the text, and enable the artificial intelligence object to operate based on the reaction information. For example, where the artificial intelligence processor receives the text information "I am going to amusement park tomorrow," as user information, the artificial intelligence object may be implemented to output voice information, such as "What amusement park do you want to go?" "It's gonna be fun. What do you want to ride?" as reaction information responsive to the text information.

The reaction information generated by the artificial intelligence processor may be determined based on various methods.

The voice recognition sensor 400 may additionally determine the user's emotional state based on the initial voice information. For example, the voice recognition sensor 400 may determine the user's emotion considering the magnitude and speed of the user's voice entered. For example, where the user speaks louder or faster, the user may be determined to be emotional, and it may be possible to determine the degree of emotion and whether it matches the user's facial expression category determined by the facial expression recognition sensor.

For example, where the user's facial expression category is determined to be anger, the magnitude and speed of the user's voice entered through the voice recognition sensor 400 may be additionally considered, and the artificial intelligence transparent display may make a specific determination on the degree of emotion (e.g., the degree of anger) of the user.

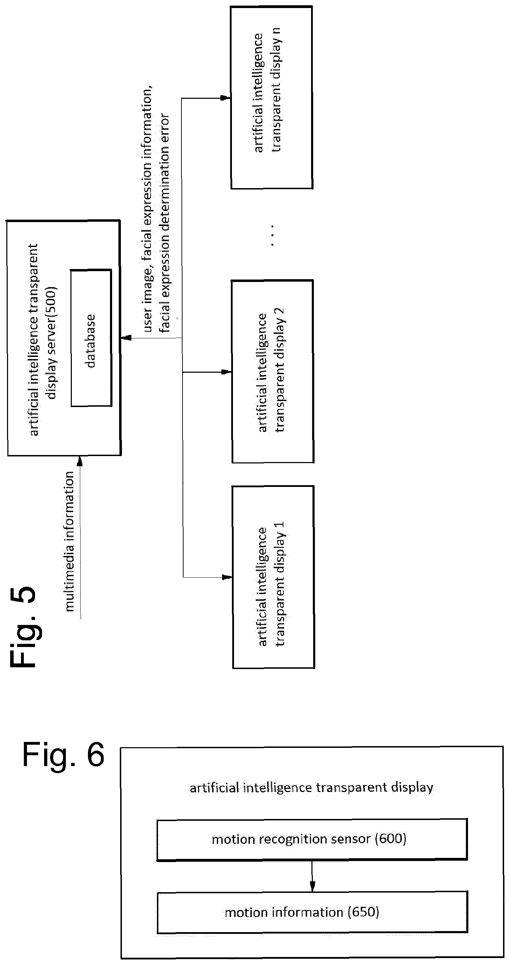

Fig. 5 is a concept view illustrating operations of an artificial intelligence transparent display according to an embodiment of the present invention.

Fig. 5 illustrates a method in which the artificial intelligence transparent display generates reaction information responsive to the text into which the user's voice has been converted.

Referring to Fig. 5, an artificial intelligence transparent display server 500 connected with the artificial intelligence transparent display may be implemented to receive conversation information from various existing multimedia information and to generate reaction information through machine learning based on the conversation information.

For example, the artificial intelligence transparent display server 500 may extract conversation information from various existing multimedia information and generate reaction information by performing machine learning on the extracted conversation information, thereby creating a database. The artificial intelligence transparent display server 500 may receive the text into which the user's uttered voice has been converted and may generate reaction information based on the database implemented based on machine learning.

Fig. 6 is a concept view illustrating operations of an artificial intelligence transparent display according to an embodiment of the present invention.

Fig. 6 illustrates a method in which an artificial intelligence transparent display performs reactions based on information gathered from various sensors.

Referring to Fig. 6, the motion recognition sensor 600 may gather the user's motion information. The motion recognition sensor 600 may recognize the user's motion and generate the user's motion information 650, and transmit the motion information to the artificial intelligence processor.

The artificial intelligence processor may generate reaction information considering the motion information 650 sensed by the motion recognition sensor. For example, information about the user's arm motion or body motion may be generated as motion information 650, and the motion information 650 may be considered to generate reaction information.

For example, the user's motion of grabbing a thing, eating food, or drinking, as an example, may be generated as motion information 650, and the artificial intelligence transparent display may generate reaction information based on such motion information 650. Further, the artificial intelligence processor may determine the user's emotional information given the pattern or magnitude of the user's motion included in the user's motion information 650 and facial expression information. For example, where the user is determined to be angry based on the user's facial expression information, the artificial intelligence transparent display may further determine the degree of anger of the user additionally considering the user's motion information 650 and may generate reaction information according to the degree of anger of the user as determined.

As another example, where the user is determined to be joyful based on the user's facial expression information, the artificial intelligence transparent display may further determine the degree of joy of the user additionally considering the user's motion information 650 and may generate reaction information according to the degree of joy of the user as determined.

The method for operating the artificial intelligence transparent display may be implemented as an application or in the form of program commands executable through various computer components, which may then be recorded in a computer-readable recording medium. The computer-readable medium may include programming commands, data files, or data structures, alone or in combinations thereof.

The programming commands recorded in the computer-readable medium may be specially designed and configured for the present invention or may be known and available to one of ordinary skill in the computer software industry.

Examples of the computer readable recording medium may include, but is not limited to, magnetic media, such as hard disks, floppy disks or magnetic tapes, optical media, such as CD-ROMs or DVDs, magneto-optical media, such as floptical disks, memories, such as ROMs, RAMs, or flash memories, or other hardware devices specially configured to retain and execute programming commands.

Examples of the programming commands may include, but are not limited to, high-level language codes executable by a computer using, e.g., an interpreter, as well as machine language codes as created by a compiler. The above-described hardware devices may be configured to operate as one or more software modules to perform processing according to the present invention and vice versa.

While the present invention has been shown and described with reference to exemplary embodiments thereof, it will be apparent to those of ordinary skill in the art that various changes in form and detail may be made thereto without departing from the spirit and scope of the present invention as defined by the following claims.

## Claims

1. A method for operating an artificial intelligence transparent display, the method comprising: sensing user information, by a plurality of sensors implemented in the artificial intelligence transparent display; generating reaction information based on the user information, by an artificial intelligence processor implemented in the artificial intelligence transparent display; and performing an operation as per the reaction information, by an artificial intelligence object output on a transparent display implemented in the artificial intelligence transparent display.

2. The method of claim 1, wherein the plurality of sensors include a facial expression recognition sensor, a voice recognition sensor, and a motion recognition sensor, and wherein the user information includes facial expression information generated by the facial expression recognition sensor, voice information generated by the voice recognition sensor, and motion information generated by the motion recognition sensor.

3. The method of claim 2, wherein the facial expression recognition sensor determines, as the facial expression information, one of a plurality of facial expression categories by analyzing a motion of a facial muscle of a user and a motion of each element included in the user's face with respect to the user's default facial expression information initially obtained, and wherein the facial expression recognition sensor determines a sensitivity of sensing a variation in facial expression to generate the facial expression information by detecting a degree of variation in the user's facial expression.

4. The method of claim 3, wherein the voice recognition sensor extracts feature information about the user's voice based on the user's initial voice information initially obtained and extracts the user's voice from a sound entered based on the feature information, and wherein the artificial intelligence transparent display senses a variation in magnitude and speed of the user's voice based on the initial voice information, determines the user's emotion, and generates the reaction information.

5. The method of claim 4, wherein the motion recognition sensor senses a pattern and magnitude of the user's motion, and wherein the artificial intelligence transparent display determines a magnitude of the user's emotion considering the pattern and magnitude of the motion, and generates the reaction information.

6. An artificial intelligence transparent display, comprising: a plurality of sensors implemented to sense user information; an artificial intelligence processor implemented to generate reaction information based on the user information; and a transparent display implemented to output an artificial intelligence object, the artificial intelligence object implemented to perform an operation as per the reaction information.

7. The artificial intelligence transparent display of claim 6, wherein the plurality of sensors include a facial expression recognition sensor, a voice recognition sensor, and a motion recognition sensor, and wherein the user information includes facial expression information generated by the facial expression recognition sensor, voice information generated by the voice recognition sensor, and motion information generated by the motion recognition sensor.

8. The artificial intelligence transparent display of claim 7, wherein the facial expression recognition sensor determines, as the facial expression information, one of a plurality of facial expression categories by analyzing a motion of a facial muscle of a user and a motion of each element included in the user's face with respect to the user's default facial expression information initially obtained, and wherein the facial expression recognition sensor determines a sensitivity of sensing a variation in facial expression to generate the facial expression information by detecting a degree of variation in the user's facial expression.

9. The artificial intelligence transparent display of claim 8, wherein the voice recognition sensor extracts feature information about the user's voice based on the user's initial voice information initially obtained and extracts the user's voice from a sound entered based on the feature information, and wherein the artificial intelligence processor senses a variation in magnitude and speed of the user's voice based on the initial voice information, determines the user's emotion, and generates the reaction information.

10. The artificial intelligence transparent display of claim 9, wherein the motion recognition sensor senses a pattern and magnitude of the user's motion, and wherein the artificial intelligence processor determines a magnitude of the user's emotion considering the pattern and magnitude of the motion, and generates the reaction information.
